# EUROPEAN PATENT APPLICATION

(11) **EP 4 832 250 A1**
(43) Date of publication of application: **28.10.2026**
(21) Application number: 25172307.8
(22) Date of filing: 24.04.2025
(51) Int. Cl.: H01R 4/38, H02G 15/18

(54) **A POWER CABLE SYSTEM**

(71) Applicant: NKT HV Cables AB, 371 65 Lyckeby (SE)
(72) Inventor: BROO, Björn, 371 64 Lyckeby (SE); HEGARDT, Anders, 372 94 Listerby (SE)
(74) Representative: Kransell & Wennborg KB

(57) **Abstract**

A power cable system (1) comprising: a cable joint (3) comprising: a stepped solid conductive body (4) defining a plurality of axial connection steps (5) configured to receive a respective conductor end (12a, 22a); a plurality of individual clamping connectors (7), each configured to surround and clamp a respective conductor end (12a, 22a) against a corresponding connection step (5) of the stepped solid conductive body (4); a first power cable (10) having a first conductor end (12a) extending into the cable joint and a second power cable (20) having a second conductor end (22a) extending into the cable joint at the second axial end thereof.

## Description

### TECHNICAL FIELD

The present disclosure generally relates to power cables and power cable systems. In particular, it relates to power a cable system comprising a cable joint for jointing two power cables, to a cable joint and a method for jointing two power cables.

### BACKGROUND

In power transmission systems, especially those utilizing high-current aluminum conductors, reliable and efficient electrical connections are critical for system performance and longevity. Conventional conductor connectors often rely on threaded fasteners, such as screws, that are driven directly into the conductor material to establish contact. However, this approach frequently results in plastic deformation of the conductor, particularly when soft metals like aluminum are used. Such deformation can compromise the integrity of the connection, increase contact resistance, and lead to premature joint failure, especially under thermal or mechanical stress.

There is a growing need for improved cable joint designs that provide high electrical conductivity, minimize mechanical degradation of the conductors, and are suitable for conductors with large cross-sectional areas. Solutions that can be prefabricated, ensure consistent contact pressure, and simplify installation are especially desirable in high-voltage and industrial cable applications.

### SUMMARY

In existing cable connection technologies for high-power applications, especially with large aluminum conductors, conductor connectors utilizing screws that are directly screwed into the conductor often result in plastic deformation of the conductor material. This leads to increased contact resistance and potentially a higher failure rate of joints over time. There is a need for a cable joint solution that ensures reliable electrical contact while avoiding mechanical degradation of the conductor ends.

A general object of the present disclosure is to provide a power cable system, a cable joint and a method for jointing two power cables which address or mitigate at least some of the above-mentioned problems.

There is hence, according to a first aspect of the present disclosure, provided a power cable system comprising a cable joint comprising: a stepped solid conductive body having a first axial end and a second axial end axially opposite the first axial end, the stepped solid conductive body defining a plurality of axial connection steps configured to receive a respective conductor end; a plurality of individual clamping connectors, each configured to surround and clamp a respective conductor end against a corresponding connection step of the stepped solid conductive body. The power cable system further comprising a first power cable having a first conductor end extending into the cable joint at the first axial end thereof, the first conductor end being clamped between a first sub-set of the individual clamping connectors and corresponding first sub-set of axial connection steps of the stepped solid conductive body; a second power cable having a second conductor end extending into the cable joint at the second axial end thereof, the second conductor end being clamped between a second sub-set of the individual clamping connectors and corresponding second subset of axial connection steps of the stepped solid conductive body.

This configuration allows axial insertion of opposing conductor ends into the cable joint and radial compression by means of the clamping connectors to ensure stable electrical contact, while avoiding, or at least reducing, damage to the conductor. Thus, an improved jointing between the first and second power cables may be achieved.

The axial connection steps of the stepped solid conductive body may be arranged such that the solid conductive body has a mirrored geometry about its central transverse plane. In this embodiment, the stepped solid conductive body increases in radial thickness in discrete axial steps from the first axial end toward a central portion, and then decreases in radial thickness in discrete axial steps from the central portion toward the second axial end. This configuration results in the solid conductive body being thickest at its axial midpoint and least thick at its axial ends. The mirrored step profile allows for symmetric insertion of conductor ends from opposite directions into the cable joint, such that each conductor end engages with a respective set of connection steps increasing in thickness toward the center portion. Hereby, a balanced mechanical loading and thermal dissipation across the length of the cable joint may be provided.

According to one embodiment, the first conductor end is stepped and comprises a plurality of first axial conductor steps correspondingly shaped as the first sub-set of axial connection steps of the stepped solid conductive body, or wherein the second conductor end is stepped and comprises a plurality of second axial conductor steps correspondingly shaped as the second sub-set of axial connection steps of the stepped solid conductive body.

The provision of stepped conductor ends that correspond in shape to the axial connection steps of the stepped solid conductive body offers several technical benefits. Firstly, the complementary step geometry of the conductor end(s) and the stepped solid conductive body provides an increased physical and electrical contact surface area between the conductor end(s) and the solid conductive body, thereby reducing contact resistance and improving current transfer efficiency. Secondly, the complementary step geometry enables precise axial and radial alignment of the conductor end(s) during installation, which facilitates consistent clamping and enhances mechanical stability of the cable joint. This configuration also distributes mechanical stress more evenly across multiple contact interfaces, reducing localized pressure and thus lowering the risk of plastic deformation of the conductor end(s). Furthermore, the complementary step geometry allows for modularity. It should be mentioned that both the first conductor end and second conductor end may be stepped with axial conductor steps correspondingly shaped as the corresponding sub-set of axial connection steps of the stepped solid conductive body. Thus, the first and the second conductor ends may be shaped with corresponding axial conductor steps, each fitting into the corresponding connection steps of the stepped solid conductive body. Preferably, the diameter of the conductors of the first and second power cables are the same. Additionally or alternatively, the first axial conductor steps and the second axial conductor steps may be arranged such that the two conductor ends together forms a mirrored geometry about its connecting interface. However, according to one embodiment, the diameter of the conductors of the first and second power cables are the different. Additionally or alternatively, the first axial conductor steps and the second axial conductor steps may be arranged such that the two conductor ends together do not form a mirrored geometry about its connecting interface. Thus, two cables with different conductor geometry may be jointed in the cable joint.

According to one embodiment, the cable joint further comprises a solid cover arranged radially outside of the clamping connectors. The inclusion of a solid cover arranged radially outside of the clamping connectors provides enhanced mechanical protection and environmental sealing of the cable joint. This configuration helps shield the clamping components from external contaminants, moisture, and mechanical impacts.

According to one embodiment, the stepped solid conductive body and the solid cover forms the circumferential outer surface of the cable joint. By having the stepped solid conductive body and the solid cover together forming the circumferential outer surface of the cable joint, the cable joint achieves a compact and structurally integrated design. For example, such configuration simplifies the external geometry for over-molding or over-sheathing (e.g. with a jacketing layer). The stepped solid conductive body and the solid cover may together form the complete outer surface of the cable joint. The stepped solid conductive body may comprise an external surface forming a part of the outer surface of the cable joint, and the solid cover may comprise an external surface forming another part of the outer surface, wherein the two external surfaces of the stepped solid conductive body and the solid cover forms the complete outer surface of the cable joint.

According to one embodiment, a diameter of the cable joint is equal to a diameter of the first power cable and of the second power cable. Matching the diameter of the cable joint to that of the connected power cables enables a smooth outer profile along the entire cable joint and power cable system. For example, such configuration simplifies the external geometry for over-molding or over-sheathing (e.g. with a jacketing layer). However, according to at least one embodiment, the diameter of the first and second power cables are different. Thus, two cables with different power cable geometry may be jointed in the cable joint. Typically, at least one of the diameters of the first and second power cables matches that of the cable joint. Thus, the outer diameter of the cable joint may be equal to, or match, the outer diameter of either or both of the first and second power cables.

According to one embodiment, the cable joint further comprises a fastening mechanism configured to exert a radial pressure from the clamping connectors to the conductor ends. This radial pressure is sufficient to ensure reliable electrical contact while avoiding plastic deformation of the conductor ends. Thus, each individual clamping connector is designed to exert a radial pressure sufficient to ensure electrical contact without causing plastic deformation of the associated conductor end.

According to one embodiment, the fastening mechanism comprises a plurality of mechanical locking elements, such as screws, extending through the clamping connectors and into the stepped solid conductive body. The mechanical locking elements may thus axially fixate the conductor ends relative the stepped solid conductive body by interacting with the clamping connectors. For example, the stepped solid conductive body may comprise a receiving bore, such as e.g. a threaded bore, into which the mechanical locking elements are fixated (e.g. screwed into). For example, each mechanical locking element may comprise a head, being larger in dimension compared to the hole of the clamping connector through which the locking element extends through, whereby the head is configured to rest against a counter acting surface of the clamping connector. According to another example, each one of the clamping connectors comprises a receiving bore, such as e.g. a threaded bore, into which the mechanical locking elements are fixated (e.g. screwed into).

According to one embodiment, each clamping connector comprises a semi-cylindrical shell. Providing each clamping connector with a semi-cylindrical shell improves the radial clamping around the conductor ends. The semi-cylindrical design may additionally enable easy positioning and improved engagement with the external surface of the conductor ends. Moreover, a semi-cylindrical shell may easily be adapted in dimension with regards to the axial conductor steps. According to one embodiment, each semi-cylindrical shell extends over 180 degrees or more of the conductor circumference. Such design enables effective radial clamping with low structural complexity.

According to one embodiment, the number of clamping connectors corresponds to the number of axial connection steps on the stepped solid conductive body. This 1:1 correspondence allows modular replacement or customization of the cable joint to match different conductor ends profiles (e.g. conductor ends with different axial conductor steps).

According to one embodiment, the conductor ends are copper or aluminum conductors. The disclosed cable joint is particularly suitable for aluminum conductors having relatively large cross-sections due to its ability to avoid plastic deformation and maintain low contact resistance over time.

According to one embodiment, the stepped solid conductive body is composed of a high-conductivity metal, such as aluminum or copper. According to one embodiment, the solid cover is composed of a high-conductivity metal, such as aluminum or copper. According to one embodiment, the conductor ends are of the same material. According to one embodiment, the stepped solid conductive body is of the same material as the conductor ends. According to one embodiment, the solid cover is of the same material as the conductor ends. According to one embodiment, the solid cover is of the same material as the stepped solid conductive body.

According to a second aspect of the present disclosure, there is provided a cable joint for jointing a first power cable having a first conductor end with a second power cable having a second conductor end. the cable joint comprises: a stepped solid conductive body having a first axial end and a second axial end axially opposite the first axial end, the stepped solid conductive body defining a plurality of axial connection steps configured to receive the first and second conductor ends; and a plurality of individual clamping connectors, each configured to surround and clamp the first or second conductor end against a corresponding connection step of the stepped solid conductive body.

Effects and features of the second aspect are largely analogous to those described above in connection with the first aspect. Embodiments mentioned in relation to the first aspect, in particular with regards to the cable joint, are largely compatible with the second aspect, of which some are mentioned below typically without repeating the technical effects thereof.

According to one embodiment, the cable joint further comprises a solid cover arranged radially outside of the clamping connectors.

According to one embodiment, the stepped solid conductive body and the solid cover forms the circumferential outer surface of the cable joint.

According to one embodiment, the cable joint further comprises a fastening mechanism configured to exert a radial pressure from the clamping connectors to the conductor ends.

According to a third aspect of the present disclosure, there is provided a method for jointing a first power cable having a first conductor end with a second power cable having a second conductor end. The method comprises:
- providing a cable joint comprising: a stepped solid conductive body having a first axial end and a second axial end axially opposite the first axial end, the stepped solid conductive body defining a plurality of axial connection steps; and a plurality of individual clamping connectors, each configured to surround and clamp the first or second conductor end against a corresponding connection step of the stepped solid conductive body;

- arranging the first conductor end in the cable joint at the first axial end thereof, and arranging the second conductor end in the cable joint at the second axial end thereof; and
- clamping the first conductor end between a first sub-set of the individual clamping connectors and corresponding first sub-set of axial connection steps of the stepped solid conductive body, and clamping the second conductor end between a second sub-set of the individual clamping connectors and corresponding second subset of axial connection steps of the stepped solid conductive body.

The method enables an improved jointing between the first and second power cables. The method may provide a reliable jointing process suitable for prefabricated high-power cable systems, with a reduced risk of deformation of the conductor ends.

Effects and features of the third aspect are largely analogous to those described above in connection with the first aspect. Embodiments mentioned in relation to the third aspect are largely compatible with the third aspect.

According to one embodiment, applicable to any one of the first to third aspects, each one of the first and second power cables comprises an insulation system surrounding the respective conductor, except for at the conductor ends. The insulation system may comprise at least an inner semiconducting layer provided around the conductor, an insulation layer provided around the inner semiconducting layer, and an outer semiconducting layer provided around the insulation layer. Hereby, the inner semiconducting layer may form a semiconducting conductor shield, while the outer semiconducting layer may form an insulation screen surrounding the (electrically insulating) insulation layer. The insulation layer typically comprises a polyolefin, such as LDPE or PP, and may be thermoplastic or crosslinked. Each one of the inner and outer semiconducting layers typically comprises a polyolefin, such as LDPE or PP, and a semiconducting material (e.g. carbon black), and may be thermoplastic or crosslinked.

The conductors of the first and second power cables may be made of a different materials, e.g. one comprising at least 50 wt% of, or consisting of, aluminum and the other comprising at least 50 wt% of, or consisting of, copper. According to another embodiment, the conductors of the first and second power cables are of the same material, e.g. comprising at least 50 wt% of, or consisting of, aluminum or copper.

Subsequent to providing the cable joint to the conductor ends of the power cables, the cable joint is typically provided with an outer jacketing layer.

According to one embodiment, applicable to any one of the first to third aspects, the power cables are configured for operation of at least 66 kV. The power cables may thus be suitable for high voltage applications.

The power cables may be HVDC power cables or HVAC power cables. The power cables may be configured for operation of at least 72 kV, such as at least 110 kV, such as at least 132 kV. According to one example, the power cables are high voltage power cables, or ultra-high voltage cables, for example for voltages of at least 450 kV, or at least 550 kV. The power cables may be underground power cables or a submarine power cables. The submarine power cables may be static submarine power cables or alternatively dynamic submarine power cables.

The cable joint of any one of the first to third aspect may be a field joint. That is, in contrast to a factor joint in which the power cable ends are jointed already in the factory, the power cables are jointed in the field, such as on a cable laying vessel.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 shows a perspective view of a power cable system according to one example;
Fig. 2 shows a cross sectional view along a longitudinal axis of the power cable system of Fig. 1 and according to one example;
Fig. 3 shows an exploded view of the power cable system of Figs. 1 and 2 and according to one example;
Fig. 4 shows a radial cross sectional view perpendicular to the longitudinal axis of an example power cable; and
Fig. 5 schematically shows a method for jointing two power cables.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

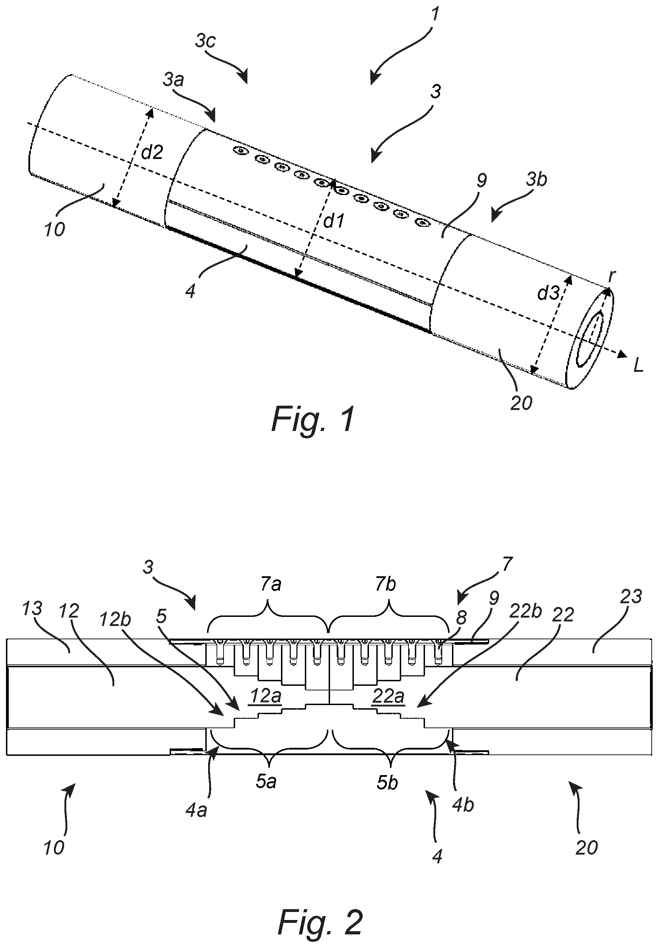

Figs. 1 and 2 show an example of a power cable system 1. The cable system 1 comprises a first power cable 10 and a second power cable 20 jointed by a cable joint 3. The first power cable 10 is connected to the cable joint 3 at a first axial end 3a and the second power cable 20 is connected to the cable joint 3 at a second axial end 3b, the second axial end 3b being opposite the first axial end 3a along a longitudinal axis L of the cable system 1. The power cables 10, 20 are in this example single power core power cables. However, it should be mentioned that the power cables could comprise several identical power cores to form corresponding multi-core power cables, such as three-phase power cables. The power cables 10, 20 may be HVDC power cables or HVAC power cables, for example for voltages higher than 66 kV, or higher than 72 kV, or higher than 110 kV, or higher than 132 kV.

Fig. 2 show a cross section along the longitudinal axis L of the power cable system 1 of Fig. 1. As show, the cable joint 3 comprises a stepped solid conductive body 4 having a first axial end 4a and a second axial end 4b axially opposite the first axial end along the longitudinal axis L. The stepped solid conductive body 4 comprises, or is formed of, a plurality of axial connection steps 5 configured to receive a respective conductor end 12a, 22a of the first and second power cables 10, 20. In more detail, the first power cable 10 comprises a first conductor 12 with a first conductor end 12a. Correspondingly, the second power cable 20 comprises a second conductor 22 with a second conductor end 22a. The first conductor end 12a extends into the cable joint 3 at the first axial end 3a thereof, and the second conductor end 22a extends into the cable joint 3 at the second axial end 3b thereof.

The cable joint 3 further comprises a plurality of individual clamping connectors 7, each configured to surround and clamp a respective conductor end 12a, 22a against a corresponding connection step 5 of the stepped solid conductive body 4. The first conductor end 12a is clamped between a first sub-set 7a of the individual clamping connectors 7 and corresponding first sub-set 5a of axial connection steps 5 of the stepped solid conductive body 4. Correspondingly, the second conductor end 22a is clamped between a second sub-set 7b of the individual clamping connectors 7 and corresponding second subset 5b of axial connection steps 5 of the stepped solid conductive body 4.

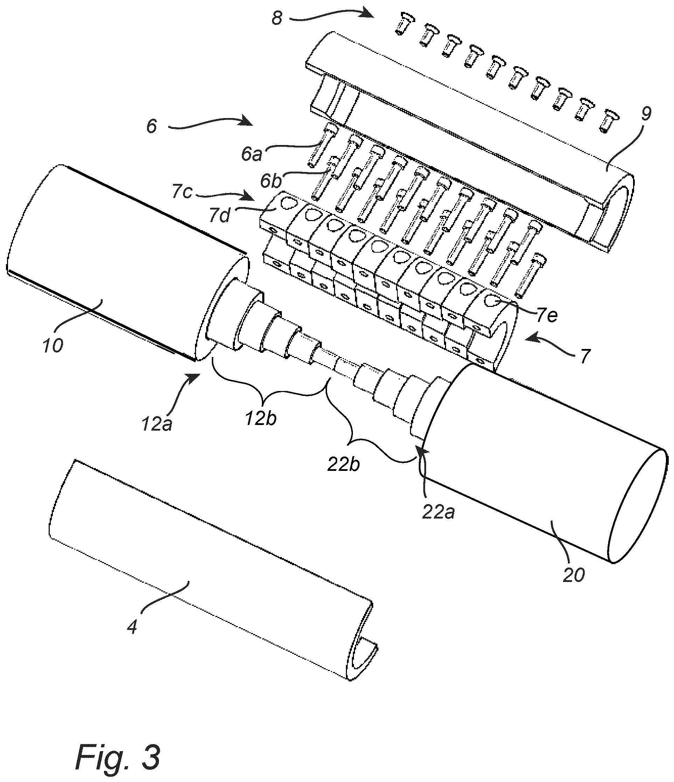

With additional reference to Fig. 3, showing an exploded view of the power cable system 1 of Figs. 1-2, the first conductor end 12a is stepped and comprises a plurality of first axial conductor steps 12b. Correspondingly, the second conductor end 22a is stepped and comprises a plurality of second axial conductor steps 22b. As shown in Fig. 3, the first and second axial conductor steps 12b, 22b are mirrored such that the first axial conductor steps 12b decreases in radial extension towards the second conductor end 22a, and the second axial conductor steps 22b decreases in radial extension towards the first conductor end 12a. The first sub-set 7a of clamping connectors 7 is here exemplified as five clamping connectors 7, which is equal to number of axial connection steps 5 of the first sub-set 5a, as well as the number of first axial conductor steps 12b. Correspondingly, the second sub-set 7b of clamping connectors 7 is here exemplified as five clamping connectors 7, which is equal to number of axial connection steps 5 of the second sub-set 5b, as well as the number of second axial conductor steps 22b.

The first axial conductor steps 12b are correspondingly shaped as the first sub-set 5a of axial connection steps 5 of the stepped solid conductive body 4. That is, the first axial conductor steps 12b are shaped to match the first sub-set 5a of axial connection steps 5. Correspondingly, the second axial conductor steps 22b are correspondingly shaped as the second sub-set 5b of axial connection steps 5 of the stepped solid conductive body 4. That is, the second axial conductor steps 22b are shaped to match the second sub-set 5b of axial connection steps 5. This is clearly shown in Fig. 2.

The number of clamping connectors 7 typically corresponds to the number of axial connection steps 5, 5a, 5b of the stepped solid conductive body 4. Each one of the clamping connectors 7 is typically shaped to conform with the axial conductor steps 12b, 22b. Thus, for a given axial position, a specific clamping connector 7 clamps a corresponding axial conductor step 12b, 22b against an associated axial connection step 5a, 5b. In other words, each clamping connector 7 is designed for its intended position within the cable joint, and is typically shaped corresponding to its associated axial connection step 5, 5a, 5b. The first sub-set 7a of the individual clamping connectors 7 and corresponding first sub-set 5a of axial connection steps 5 of the stepped solid conductive body 4, are together shaped to clamp the first axial conductor steps 12b. Correspondingly, the second sub-set 7b of the individual clamping connectors 7 and corresponding second sub-set 5b of axial connection steps 5 of the stepped solid conductive body 4, are together shaped to clamp the second axial conductor steps 22b. In the example cable joint 3 of Fig. 3, each clamping connector 7 comprises a semi-cylindrical shell 7d.

As shown in Fig. 3, the cable joint 3 may further comprise a fastening mechanism 6 configured to exert a radial pressure from the clamping connectors 7 to the conductor ends 12a, 22a. For example, the fastening mechanism 6 may comprise a plurality of mechanical locking elements 6a, 6b, e.g. screws or bolts, extending through the clamping connectors 7, via through hole 7e, and into the stepped solid conductive body 4. For example, the stepped solid conductive body 4 may comprise a receiving bore (not shown), such as e.g. a threaded bore, into which the mechanical locking elements 6 are fixated (e.g. screwed into).

The cable joint 3 may further comprise a solid cover 9 arranged radially outside of the clamping connectors 7. As shown in Figs. 1-2, the stepped solid conductive body 4 and the solid cover 9 forms the circumferential outer surface 3c of the cable joint 3. Preferably, a diameter d1 of the cable joint 3 is equal to a diameter d2 of the first power cable 10 and a diameter d3 of the second power cable 20. Hereby, the cable joint 3 and the connected first and second power cables 10, 20 together forms a smooth outer profile along the entire cable joint 3 and power cable system 1. The solid cover 9 may be attached to the clamping connectors 7 by means of a secondary fastening mechanism 8, e.g. a plurality of screws. Such secondary fastening mechanism 8 may extend through the solid cover and into the clamping connectors 7, as shown in Fig. 2.

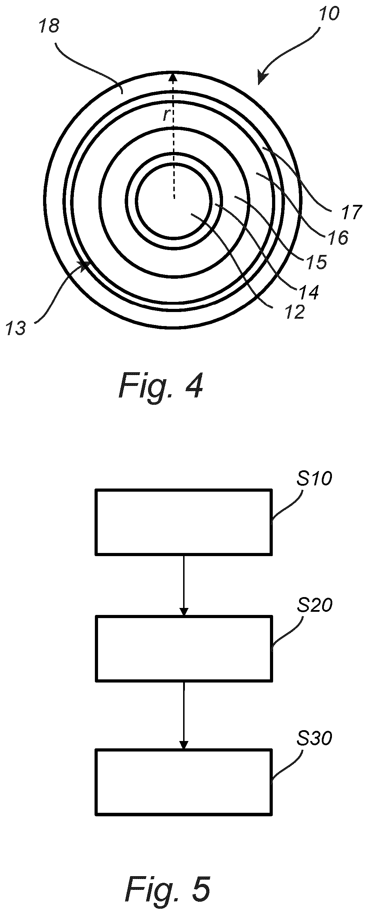

As also shown in Fig. 2, the first power cable 10 may comprises an insulation system 13 surrounding the conductor 12. The insulation system 13 is further exemplified in the embodiment of the first power cable 10 shown in Fig. 4.

In Fig. 4, a radial cross section of an embodiment of the first power cable 10 is shown. However, even if Fig. 4 is exemplified for the first power cable 10, the second power cable 20 may be correspondingly formed (i.e. it may be comprised of the same, or corresponding, layers). The radial cross section is a cross section in the radial direction r of the power cable 1, i.e. a plane perpendicular to a centre axis of the power cable 10 (the centra axis extending into the paper in Fig. 4, and shown as a longitudinal axis L in Fig. 1). The power cable 10 may e.g. be defined by cylindrical coordinates (by a radial distance r, azimuth φ which is the angle along the circumferential direction, and an axial coordinated along the longitudinal axis).

As previously described, the first power cable 10 comprises a first conductor 12 extending along the centre axis (or longitudinal axis L). The first conductor 12 may for example be stranded, segmental of Milliken type, solid, or a profile wire conductor. The first conductor 12 may for example comprise copper or aluminum.

The first power cable 10 of Fig. 4 comprises an insulation system 13 provided around, and covering, the first conductor 12. The insulation system 13 is here exemplified to comprises a first semiconducting layer 14 provided around the first conductor 12, an insulation layer 15 provided around the first semiconducting layer 14, and optionally, a second semiconducting layer 16 provided around the insulation layer 15. Thus, the first semiconducting layer 14 surrounds the first conductor 12, the insulation layer 15 surrounds the first semiconducting layer 14, and the optional second semiconducting layer 16 surrounds the insulation layer 15.

In the embodiment of Fig. 4, the insulation layer 15 is arranged to be in direct contact with, and radially outside of the first semiconducting layer 14. Moreover, the optional second semiconducting layer 16 is arranged to be in direct contact with, and radially outside of, the insulation layer 15. Thus, the first semiconducting layer 14 may form a semiconducting conductor shield and be referred to as an inner semiconducting layer. The optional second semiconducting layer 16 may form an insulation screen and be referred to as an outer semiconducting layer.

The insulation system 13 may be extruded and comprise thermosetting and/or thermoplastic polymer material. For example, the layers 14, 15, 16 of the insulation system 13 may be different in the aspect of being made of thermosetting and thermoplastic polymer material. In some examples, at least the insulation layer 15 is made of thermoplastic polymer material, e.g. LDPE or PP, and hence not crosslinked. Thus, the insulation layer 15 may not comprise peroxide or other crosslinking agents or crosslinking residues. Moreover, each one of the first and second semiconducting layers 14, 16 may be made of a thermoplastic polymer material, e.g. LDPE or PP, and hence not crosslinked. Typically, the insulations system 13 is not crosslinked. However, according to an alternative example, the insulation layer 15, and/or at least one of the first and second semiconducting layers 14, 16 comprises crosslinked polyethylene (XLPE). The first semiconducting layer 14 and the optional second semiconducting layer 16 typically comprises an electrically conductive compound, e.g. carbon black.

The first power cable 10 may further comprises metal layer 17 surrounding the insulation system 13. The metal layer 17 is typically arranged to prevent, or at least greatly reduce, water penetrating into the insulation system 13 from the outside. The metal layer may thus be a metallic water barrier which may hermetically seal the insulation system 13. The metal layer 17 may be a lead-free metal layer.

The first power cable 10 may furthermore comprise an outer jacketing layer 18, e.g. a polymeric jacket, provided around the insulation system 13. In the embodiment of Fig. 4, the outer jacketing layer 18 is arranged in direct contact with, and radially outside of, the metal layer 17. Thus, the metal layer 17 is arranged in between the insulation system 13 and the outer jacketing layer 18. The outer jacketing layer 18 may e.g. be the outermost layer of the first power cable 10. The outer jacketing layer 18 may be wholly or partly water impermeable. The polymeric material of the outer jacketing layer 18 may e.g. be polyethylene, such as a high density polyethylene (HDPE).

Turning to Fig. 5, showing a flow-chart of a method for jointing a first power cable 10 having a first conductor end 12a with a second power cable 20 having a second conductor end 22a. The first and second power cables 10, 20 may be those described with reference to Figs. 1-4.

In a first step S10, a cable joint 3 is provided. The cable joint 3 may be that described with reference to Figs. 1-4. Thus, the cable joint 3 comprises at least: a stepped solid conductive body 4 having a first axial end 4a and a second axial end 4b axially opposite the first axial end, the stepped solid conductive body defining a plurality of axial connection steps 5; and a plurality of individual clamping connectors 7, each configured to surround and clamp the first or second conductor end 12a, 22a against a corresponding connection step 5 of the stepped solid conductive body.

In a second step S20, the first conductor end 12a is arranged in the cable joint 3 at the first axial end 3a thereof, and the second conductor end 22a is arranged in the cable joint 3 at the second axial end 3b thereof. The first and second conductor ends 12a, 22a may be arranged to be in direct contact with each other in the cable joint 3. The first and second conductor ends 12a, 22a may be of same material, or may be of different materials. The material of any one of the first and second conductors 12, 22 may e.g. comprise at least 50 wt% of, or consist of, aluminum or copper.

In a third step S30, the first conductor end 12a is clamped between a first sub-set 7a of the individual clamping connectors 7 and corresponding first sub-set 5a of axial connection steps 5 of the stepped solid conductive body, and the second conductor end 22a is clamped between a second sub-set 7b of the individual clamping connectors 7 and corresponding second subset 5b of axial connection steps 5 of the stepped solid conductive body.

The step of clamping S30 may be performed using a fastening mechanism 6 as described with reference to Figs. 1-4.

The first and second power cables 10, 20 may be of the same type, e.g. of the same operating voltage and/or comprising corresponding conductors 12, 22 and/or layers 14, 15, 16 of the corresponding insulation system 13. However, according to one example the first and second power cables 10, 20 are of different types, e.g. differing by the operating voltage and/or have different type of conductors 12, 22 (or conductor ends 12a, 22a) and/or have different layers 14, 15, 16 of the corresponding insulation system 13. For example, the diameter of the first and second conductors 12, 22 may differ. Additionally or alternatively, the diameter of the first and second power cables 10, 20 may differ. Additionally or alternatively, the first and second power cables 10, 20 are of different or of the same cable length.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A power cable system (1) comprising:
- a cable joint (3) comprising:
- a stepped solid conductive body (4) having a first axial end (4a) and a second axial end (4b) axially opposite the first axial end, the stepped solid conductive body (4) defining a plurality of axial connection steps (5) configured to receive a respective conductor end (12a, 22a),
- a plurality of individual clamping connectors (7), each configured to surround and clamp a respective conductor end (12a, 22a) against a corresponding connection step (5) of the stepped solid conductive body (4),
- a first power cable (10) having a first conductor end (12a) extending into the cable joint at the first axial end thereof, the first conductor end being clamped between a first sub-set (7a) of the individual clamping connectors (7) and corresponding first sub-set (5a) of axial connection steps (5) of the stepped solid conductive body;
- a second power cable (20) having a second conductor end (22a) extending into the cable joint at the second axial end thereof, the second conductor end being clamped between a second sub-set (7b) of the individual clamping connectors (7) and corresponding second subset (5b) of axial connection steps (5) of the stepped solid conductive body.

2. The power cable system (1) of claim 1, wherein the first conductor end (12a) is stepped and comprises a plurality of first axial conductor steps (12b) correspondingly shaped as the first sub-set (5a) of axial connection steps (5) of the stepped solid conductive body (4), or wherein the second conductor end (22a) is stepped and comprises a plurality of second axial conductor steps (22b) correspondingly shaped as the second sub-set (5b) of axial connection steps (5) of the stepped solid conductive body (4).

3. The power cable system (1) of any of claims 1-2, wherein the cable joint (3) further comprises a solid cover (9) arranged radially outside of the clamping connectors (7).

4. The power cable system (1) of claim 3, wherein the stepped solid conductive body (4) and the solid cover (9) forms the circumferential outer surface (3c) of the cable joint (3).

5. The power cable system (1) of any of claims 1-4, wherein a diameter (d1) of the cable joint (3) is equal to a diameter (d2, d3) of the first power cable (10) and of the second power cable (20).

6. The power cable system (1) of any of claims 1-5, wherein the cable joint (3) further comprises a fastening mechanism (6) configured to exert a radial pressure from the clamping connectors (7) to the conductor ends (12a, 22a).

7. The power cable system (1) of claim 6, wherein the fastening mechanism (6) comprises a plurality of mechanical locking elements (6a, 6b) extending through the clamping connectors (7) and into the stepped solid conductive body (4).

8. The power cable system (1) of any of claims 1-7, wherein each clamping connector (7) comprises a semi-cylindrical shell (7d).

9. The power cable system (1) of any of claims 1-8, wherein the number of clamping connectors (7) corresponds to the number of axial connection steps (5) on the stepped solid conductive body (4).

10. The power cable system (1) of any of claims 1-9, wherein the conductor ends (12a, 22a) are copper or aluminum conductors.

11. A cable joint (3) for jointing a first power cable (10) having a first conductor end (12a) with a second power cable (20) having a second conductor end (22a), the cable joint comprising:
- a stepped solid conductive body (4) having a first axial end (4a) and a second axial end (4b) axially opposite the first axial end, the stepped solid conductive body defining a plurality of axial connection steps (5) configured to receive the first and second conductor ends (12a, 22a),
- a plurality of individual clamping connectors (7), each configured to surround and clamp the first or second conductor end (12a, 22a) against a corresponding connection step (5) of the stepped solid conductive body.

12. The cable joint (3) of claim 11, further comprising a solid cover (9) arranged radially outside of the clamping connectors (7).

13. The cable joint (3) of claim 12, wherein the stepped solid conductive body (4) and the solid cover (9) forms the circumferential outer surface of the cable joint.

14. The cable joint (3) of any of claims 11-13, further comprising a fastening mechanism (6) configured to exert a radial pressure from the clamping connectors (7) to the conductor ends (12a, 22a).

15. A method for jointing a first power cable (10) having a first conductor end (12a) with a second power cable (20) having a second conductor end (22a), the method comprises:
- providing (S10) a cable joint (3) comprising: a stepped solid conductive body (4) having a first axial end (4a) and a second axial end (4b) axially opposite the first axial end, the stepped solid conductive body defining a plurality of axial connection steps (5); and a plurality of individual clamping connectors (7), each configured to surround and clamp the first or second conductor end (12a, 22a) against a corresponding connection step (5) of the stepped solid conductive body,
- arranging (S20) the first conductor end in the cable joint at the first axial end thereof, and arranging the second conductor end in the cable joint at the second axial end thereof,
- clamping (S30) the first conductor end (12a) between a first sub-set (7a) of the individual clamping connectors (7) and corresponding first sub-set (5a) of axial connection steps (5) of the stepped solid conductive body, and clamping the second conductor end (22a) between a second sub-set (7b) of the individual clamping connectors (7) and corresponding second subset (5b) of axial connection steps (5) of the stepped solid conductive body.
